# EUROPEAN PATENT SPECIFICATION

(11) **EP 3 908 636 B1**
(45) Date of publication and mention of the grant of the patent: **04.10.2023**
(21) Application number: 19939739.9
(22) Date of filing: 31.07.2019
(51) Int. Cl.: C09D 11/50, C09D 11/037, C09D 11/107, G03G 9/09, G03G 9/12, B42D 25/378

(54) **ELECTROSTATIC INK COMPOSITION**
ELEKTROSTATISCHE TINTENZUSAMMENSETZUNG
COMPOSITION D'ENCRE ÉLECTROSTATIQUE

(43) Date of publication of application: 17.11.2021
(73) Proprietor: Hewlett-Packard Development Company, L.P., Spring TX 77389 (US)
(72) Inventor: KAGAN, Olga, 7403619 Nes Ziona (IL); KAPLOUN, Vladislav, 7403619 Nes Ziona (IL); NUCHIMOV, Rada, 7403619 Nes Ziona (IL); KOKOTOV, Michael, 7403619 Nes Ziona (IL); GRINWALD, Yaron, 7403619 Nes Ziona (IL); TEISHEV, Albert, 7403662 Nes Ziona (IL); BROS, Ofir, 7403619 Nes Ziona (IL); FARRAN, Samer, 7403619 Nes Ziona (IL)
(74) Representative: Haseltine Lake Kempner LLP
(86) International application number: PCT/US2019/044389
(87) International publication number: WO 2021/021164

(56) References cited:
- EP-A2- 2 799 398
- WO-A1-99/35194
- WO-A1-2013/175339
- WO-A1-2013/178265
- WO-A1-2013/180716
- WO-A1-2015/167429
- WO-A1-2017/012639
- WO-A1-2017/148537
- WO-A1-2017/157473
- US-A1- 2010 062 360

## Description

### Background

Electrostatic printing processes, sometimes termed electrophotographic printing processes, typically involve creating an image on a photoconductive surface, applying an ink having charged particles to the photoconductive surface, such that they selectively bind to the image, and then transferring the charged particles in the form of the image to a print substrate.

The photoconductive surface may be on a cylinder and is often termed a photo imaging plate (PIP). The photoconductive surface is selectively charged with a latent electrostatic image having image and background areas with different potentials. For example, an electrostatic ink composition including charged particles in a liquid carrier can be brought into contact with the selectively charged photoconductive surface. The charged particles adhere to the image areas of the latent image while the background areas remain clean. The image is then transferred to a print substrate (e.g., a polymer substrate) directly or by being first transferred to an intermediate transfer member, which can be a soft swelling blanket, which is often heated to fuse the solid image and evaporate the liquid carrier, and then to the print substrate.

Ink sets for printing can be based on the CMYK color model, with four inks (cyan, magenta, yellow, and key/black). Specialist pigments can be used in place of the CMYK pigments where particular visual effects are required, such as for bank notes and other security applications.

### Detailed Description

Before the compositions, methods and related aspects of the disclosure are disclosed and described, it is to be understood that this disclosure is not restricted to the particular process features and materials disclosed herein because such process features and materials may vary somewhat. It is also to be understood that the terminology used herein is used for the purpose of describing particular examples. The terms are not intended to be limiting because the scope is intended to be limited by the appended claims and equivalents thereof.

It is noted that, as used in this specification and the appended claims, the singular forms "a", "an", and "the" include plural referents unless the context clearly dictates otherwise.

As used herein, "liquid carrier", "carrier", or "carrier vehicle" refer to the fluid in which the polymer resin, pigment(s), charge directors and/or other additives can be dispersed to form a liquid electrostatic ink or inkjet ink. Liquid carriers can include a mixture of a variety of different agents, such as surfactants, co-solvents, viscosity modifiers, humectants, sequestering agents, buffers, biocides and/or other possible ingredients.

As used herein, "electrostatic ink composition" generally refers to an ink composition, which may be in liquid form, generally suitable for use in an electrostatic printing process, sometimes termed an electrophotographic printing process. The electrostatic ink composition may include chargeable particles suspended in a liquid carrier, which may be as described herein.

As used herein, "co-polymer" refers to a polymer that is polymerized from at least two monomers. However, a copolymer of a particular list of monomer types (e.g., a copolymer of monomer A and monomer B) refers to a copolymer that is polymerized from monomers of those types and no other types of monomer (e.g. an AB polymer).

As used herein, "total base number" (TBN), sometimes simply referred to as base number, may be determined using standard techniques, including, those laid out in ASTM Designation D4739 - 08, such as Test Method D2896, Test Method D4739, and ASTM Designation D974 - 08, with Test Method D2896 being used if any discrepancy is shown between test methods, and unless otherwise stated, the test method(s) will be the most recently published at the time of filing this patent application. "mgKOH/g material" indicates "mgKOH per gram of dispersant". The measurement of TBN of the dispersant can either be on the pure dispersant, or a dispersant in water or a hydrocarbon liquid, such as 60 wt% dispersant in white spirit, e.g. dearomatized white spirit, mineral oil or distillate (e.g. C₁₀₋₂₀ hydrocarbons), and then adjusted as if it had been measured on the pure dispersant.

As used herein, "melt flow rate" generally refers to the extrusion rate of a resin through an orifice of defined dimensions at a specified temperature and load, usually reported as temperature/load, for example, 190°C/2.16 kg. Flow rates can be used to differentiate grades or provide a measure of degradation of a material as a result of molding. In the present disclosure, "melt flow rate" is measured per ASTM D1238-04c Standard Test Method for Melt Flow Rates of Thermoplastics by Extrusion Plastometer. If a melt flow rate of a particular polymer is specified, unless otherwise stated, it is the melt flow rate for that polymer alone, in the absence of any of the other components of the electrostatic composition.

A certain monomer may be described herein as constituting a certain weight percentage of a polymer. This indicates that the repeating units formed from the said monomer in the polymer constitute said weight percentage of the polymer.

As used herein, "liquid electrostatic(ally) printing" or "liquid electrophotographic(ally) printing" generally refers to the process that provides an image that is transferred from a photo imaging substrate or plate either directly or indirectly via an intermediate transfer member to a print substrate, for example, a polymer substrate. As such, the image is not substantially absorbed into the photo imaging substrate or plate on which it is applied. Additionally, "liquid electrophotographic printers" or "liquid electrostatic printers" generally refer to those printers capable of performing electrophotographic printing or electrostatic printing, as described above. A liquid electrophotographic (LEP) printing process may involve subjecting a liquid electrophotographic ink composition to an electric field, for example, an electric field having a field strength of 1000 V/cm or more, in some examples, 1000 V/mm or more.

As used herein, "LEP image" or "printed LEP image" refer to an image which has been printed, for example, on a print substrate, by liquid electrophotographically printing a LEP ink composition described herein.

As used herein, "NVS" is an abbreviation of the term "non-volatile solids".

As used herein, "particle size", with particular reference to the D₅₀ particle size, refers to the diameter of the particle that 50% of a sample's mass is smaller than and 50% of a sample's mass is larger than. Particle size as referred to herein may be measured using laser diffraction particle size analyser, such as the Malvern Mastersizer 3000.

As used herein, the term "aluminium-based", in the context of color-shifting pigments is not to be construed as being limited to metallic aluminium. On the contrary, the term will be understood as encompassing not only metallic (elemental) aluminium but also materials in which atomic aluminium is present, for example alumina or aluminium oxide (Al₂O₃).

As used herein, the term "about" is used to provide flexibility to a numerical range endpoint by providing that a given value may be a little above or a little below the endpoint. The degree of flexibility of this term can be dictated by the particular variable.

If a standard test is mentioned herein, unless otherwise stated, the version of the test to be referred to is the most recent at the time of filing this patent application.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not just the numerical values explicitly recited as the end points of the range, but also to include all the individual numerical values or sub-ranges encompassed within that range as if each numerical value and sub-range is explicitly recited. As an illustration, a numerical range of "about 1 wt.% to about 5 wt.%" should be interpreted to include not just the explicitly recited values of about 1 wt.% to about 5 wt.%, but also to include individual values and subranges within the indicated range. Thus, included in this numerical range are individual values such as 2, 3.5, and 4 and sub-ranges such as from 1-3, from 2-4, and from 3-5, and so on. This same principle applies to ranges reciting a single numerical value. Furthermore, such an interpretation should apply regardless of the breadth of the range or the characteristics being described.

As used herein, unless specified otherwise, wt.% values are to be taken as referring to a weight-for-weight (w/w) percentage of solids in the ink composition, and not including the weight of any carrier fluid present.

Unless otherwise stated, any feature described herein can be combined with any aspect or any other feature described herein.

In an aspect there is provided a liquid electrostatic ink composition, comprising:
a liquid carrier; and
chargeable toner particles comprising a resin and an aluminium-based color-shifting pigment.

In another aspect there is provided a method of printing, comprising:
printing onto a substrate a liquid electrostatic ink composition, the composition comprising:
a liquid carrier; and
chargeable toner particles comprising a resin and an aluminium-based color-shifting pigment.

In another aspect there is provided a printed article comprising:
a print substrate, having printed thereon an electrostatic ink composition comprising chargeable toner particles comprising a resin and an aluminium-based color-shifting pigment.

Security inks, such as those used in printing bank notes and tamper-proof labels, typically utilise specialist pigments that are, for example, only detectable under certain wavelengths of light or that have color-shifting properties under different conditions. The present inventors have found that a liquid electrostatic ink composition having color-shifting aluminium-based pigments present can be prepared using standard techniques for preparing liquid electrostatic inks without any loss of the color-shifting properties of the aluminium-based pigment when printed using a liquid electrostatic printing method.

### Liquid electrostatic ink composition

In some examples the liquid electrostatic ink composition is a security ink composition. In some examples, the liquid electrostatic ink composition is a security LEP ink composition. The liquid electrostatic ink composition may be a security ink composition having an aluminium-based color-shifting pigment therein. The liquid electrostatic ink composition comprises a carrier liquid and chargeable particles suspended in the carrier liquid. The chargeable particles may comprise a thermoplastic resin.

The chargeable particles comprises resin and the aluminium-based color-shifting pigment. In some examples, the electrostatic ink composition may comprise a thermoplastic resin and the pigment.

In some examples, the electrostatic ink composition may comprise a thermoplastic resin and a charge director. In some examples, the electrostatic ink composition may comprise a thermoplastic resin, the pigment and a charge director.

In some examples, the electrostatic ink composition may comprise a thermoplastic resin and a charge adjuvant. In some examples, the electrostatic ink composition may comprise a thermoplastic resin, a pigment and a charge adjuvant. In some examples, the electrostatic ink composition may comprise a thermoplastic resin, a charge director and a charge adjuvant. In some examples, the electrostatic ink composition may comprise a thermoplastic resin, a pigment, a charge director and a charge adjuvant.

### Liquid carrier

The electrostatic ink composition comprises a liquid carrier. Generally, the liquid carrier can act as a dispersing medium for the other components in the electrostatic ink composition. For example, the liquid carrier can comprise or be a hydrocarbon, silicone oil, vegetable oil, or the like. The liquid carrier can include, but is not limited to, an insulating, non-polar, non-aqueous liquid that can be used as a medium for toner particles. The liquid carrier can include compounds that have a resistivity in excess of about 10⁹ ohm·cm. The liquid carrier may have a dielectric constant below about 5, in some examples, below about 3. The liquid carrier can include, but is not limited to, hydrocarbons. The hydrocarbon can include, but is not limited to, an aliphatic hydrocarbon, an isomerized aliphatic hydrocarbon, a branched chain aliphatic hydrocarbon, an aromatic hydrocarbon, and combinations thereof. Examples of the liquid carrier include, but are not limited to, aliphatic hydrocarbons, isoparaffinic compounds, paraffinic compounds, dearomatized hydrocarbon compounds, and the like. In particular, the liquid carrier can include, but is not limited to, Isopar-G^{™}, Isopar-H^{™}, Isopar-L^{™}, Isopar-M^{™}, Isopar-K^{™}, Isopar-V^{™}, Norpar 12^{™}, Norpar 13^{™}, Norpar 15^{™}, Exxol D40^{™}, Exxol D80^{™}, Exxol D100^{™}, Exxol D130^{™}, and Exxol D140^{™} (each sold by EXXON CORPORATION); Teclen N-16^{™}, Teclen N-20^{™}, Teclen N-22^{™}, Nisseki Naphthesol L^{™}, Nisseki Naphthesol M^{™}, Nisseki Naphthesol H^{™}, #0 Solvent L^{™}, #0 Solvent M^{™}, #0 Solvent H^{™}, Nisseki Isosol 300^{™}, Nisseki Isosol 400^{™}, AF-4^{™}, AF-5^{™}, AF-6^{™} and AF-7^{™} (each sold by NIPPON OIL CORPORATION); IP Solvent 1620^{™} and IP Solvent 2028^{™} (each sold by IDEMITSU PETROCHEMICAL CO., LTD.); Amsco OMS^{™} and Amsco 460^{™} (each sold by AMERICAN MINERAL SPIRITS CORP.); and Electron, Positron, New II, Purogen HF (100% synthetic terpenes) (sold by ECOLINK^{™}).

Before electrostatic printing, the liquid carrier can constitute about 20% to 99.5% by weight of the electrostatic ink composition, in some examples, 50% to 99.5% by weight of the electrostatic ink composition. Before printing, the liquid carrier may constitute about 40 to 90% by weight of the electrostatic ink composition. Before printing, the liquid carrier may constitute about 60% to 80% by weight of the electrostatic ink composition. Before printing, the liquid carrier may constitute about 90% to 99.5% by weight of the electrostatic ink composition, in some examples, 95% to 99% by weight of the electrostatic ink composition.

The electrostatic ink, when electrostatically printed, may be substantially free from liquid carrier. In an electrostatic printing process and/or afterwards, the liquid carrier may be removed, for example, by an electrophoresis processes during printing and/or evaporation, such that substantially just solids are transferred to the substrate. Substantially free from liquid carrier may indicate that the ink printed on the substrate contains less than 5 wt.% liquid carrier, in some examples, less than 2 wt.% liquid carrier, in some examples, less than 1 wt.% liquid carrier, in some examples, less than 0.5 wt.% liquid carrier. In some examples, the ink printed on the substrate is free from liquid carrier.

### Chargeable particles

The electrostatic ink composition comprises chargeable particles comprising a resin and an aluminium-based color-shifting pigment.

### Resin

The electrostatic ink composition includes a resin, which may be a thermoplastic resin. A thermoplastic polymer is sometimes referred to as a thermoplastic resin. The resin may coat the pigment(s). In some examples, the resin coats the pigment(s) such that particles are formed having a core of pigment and an outer layer of resin thereon. The outer layer of resin may coat the pigment(s) partially or completely.

In some examples, the electrostatic ink composition may comprise ink particles comprising a pigment(s) and a resin.

The resin typically includes a polymer. In some examples, the polymer of the resin may be selected from ethylene acrylic acid copolymers; ethylene methacrylic acid copolymers; ethylene vinyl acetate copolymers; copolymers of ethylene (e.g. 80 wt% to 99.9 wt%) and alkyl (e.g. C1 to C5) ester of methacrylic or acrylic acid (e.g. 0.1 wt% to 20 wt%); copolymers of ethylene (e.g. 80 wt% to 99.9 wt%), acrylic or methacrylic acid (e.g. 0.1 wt% to 20.0 wt%) and alkyl (e.g. C1 to C5) ester of methacrylic or acrylic acid (e.g. 0.1 wt% to 20 wt%); polyethylene; polystyrene; isotactic polypropylene (crystalline); ethylene ethyl acrylate; polyesters; polyvinyl toluene; polyamides; styrene/butadiene copolymers; epoxy resins; acrylic resins (e.g. copolymer of acrylic or methacrylic acid and at least one alkyl ester of acrylic or methacrylic acid wherein alkyl is, in some examples, from 1 to about 20 carbon atoms, such as methyl methacrylate (e.g. 50 wt% to 90 wt%)/methacrylic acid (e.g. 0 wt% to 20 wt%)/ethylhexylacrylate (e.g. 10 wt% to 50 wt%)); ethylene-acrylate terpolymers: ethylene-acrylic esters-maleic anhydride (MAH) or glycidyl methacrylate (GMA) terpolymers; ethylene-acrylic acid ionomers and combinations thereof.

In some examples, the polymer is a copolymer of an alkylene monomer and a monomer having an acid side group. In some examples the alkylene monomer is an ethylene or a propylene monomer. In some examples, the monomer having an acid side group is an acrylic acid monomer or a methacrylic acid monomer. In some examples, the electrostatic ink composition comprises a polymer resin comprising a copolymer of an alkylene monomer and a monomer selected from acrylic acid and methacrylic acid.

The resin may comprise a polymer having acidic side groups. The polymer having acidic side groups may have an acidity of 50 mg KOH/g or more, in some examples an acidity of 60 mg KOH/g or more, in some examples an acidity of 70 mg KOH/g or more, in some examples an acidity of 80 mg KOH/g or more, in some examples an acidity of 90 mg KOH/g or more, in some examples an acidity of 100 mg KOH/g or more, in some examples an acidity of 105 mg KOH/g or more, in some examples 110 mg KOH/g or more, in some examples 115 mg KOH/g or more. The polymer having acidic side groups may have an acidity of 200 mg KOH/g or less, in some examples 190 mg or less, in some examples 180 mg or less, in some examples 130 mg KOH/g or less, in some examples 120 mg KOH/g or less. Acidity of a polymer, as measured in mg KOH/g can be measured using standard procedures, for example using the procedure described in ASTM D1386.

The resin may comprise a polymer, in some examples a polymer having acidic side groups, that has a melt flow rate of less than about 60 g/10 minutes, in some examples about 50 g/10 minutes or less, in some examples about 40 g/10 minutes or less, in some examples 30 g/10 minutes or less, in some examples 20 g/10 minutes or less, in some examples 10 g/10 minutes or less. In some examples, all polymers having acidic side groups and/or ester groups in the particles each individually have a melt flow rate of less than 90 g/10 minutes, 80 g/10 minutes or less, in some examples 80 g/10 minutes or less, in some examples 70 g/10 minutes or less, in some examples 60 g/10 minutes or less.

The polymer having acidic side groups can have a melt flow rate of about 10 g/10 minutes to about 120 g/10 minutes, in some examples about 10 g/10 minutes to about 70 g/10 minutes, in some examples about 10 g/10 minutes to 40 g/10 minutes, in some examples 20 g/10 minutes to 30 g/10 minutes. The polymer having acidic side groups can have a melt flow rate of in some examples about 50 g/10 minutes to about 120 g/10 minutes, in some examples 60 g/10 minutes to about 100 g/10 minutes.

In some examples, the polymer having acid side groups has a melt flow rate of greater than about 120g/10 minutes, in some examples greater than about 200g/10 minutes, in some examples greater than about 300 g/10 minutes, in some examples greater than about 400 g/10 minutes. In some examples, the polymer having acid side groups has a melt flow rate of about 450 g/10 minutes.

In some examples, the polymer having acid side groups has a melt flow rate of less than about 500 g/10 minutes.

In some examples, the polymer having acid side groups has a melt flow rate in the range of about 150 g/10 minutes to about 600g/10 minutes. In some examples, the polymer having acid side groups has a melt flow rate in the range of about 200g/10 minutes to about 500g/10 minutes.

In some examples, the polymer having acid side groups constitutes at least 50 wt.% of the resin, in some examples at least 60 wt.% in some examples at least 80 wt.%, in some examples at least 90 wt.%. In some examples, the polymer having acid side groups has a melt flow rate of greater than about 200 g/10 minutes, in some examples a melt flow rate of greater than about 200 g/10 minutes and up to about 500 g/10 minutes, and constitutes at least 50 wt.% of the resin, in some examples at least 60 wt.% in some examples at least 80 wt.%, in some examples at least 90 wt.%.

The melt flow rate can be measured using standard procedures, for example as described in ASTM D1238.

The acidic side groups may be in free acid form or may be in the form of an anion and associated with one or more counterions, generally metal counterions, e.g. a metal selected from the alkali metals, such as lithium, sodium and potassium, alkali earth metals, such as magnesium or calcium, and transition metals, such as zinc. The polymer having acidic side groups can be selected from resins such as copolymers of ethylene and an ethylenically unsaturated acid of either acrylic acid or methacrylic acid; and ionomers thereof, such as methacrylic acid and ethylene-acrylic or methacrylic acid copolymers which are at least partially neutralized with metal ions (e.g. Zn, Na, Li) such as SURLYN^{®} ionomers. The polymer comprising acidic side groups can be a copolymer of ethylene and an ethylenically unsaturated acid of either acrylic or methacrylic acid, where the ethylenically unsaturated acid of either acrylic or methacrylic acid constitute from 5 wt% to about 25 wt% of the copolymer, in some examples from 10 wt% to about 20 wt% of the copolymer.

The resin may comprise two different polymers having acidic side groups. The two polymers having acidic side groups may have different acidities, which may fall within the ranges mentioned above. The resin may comprise a first polymer having acidic side groups that has an acidity of from 50 mg KOH/g to 110 mg KOH/g and a second polymer having acidic side groups that has an acidity of 110 mg KOH/g to 130 mg KOH/g.

The resin may comprise two different polymers having acidic side groups: a first polymer having acidic side groups that has a melt flow rate of about 10 g/10 minutes to about 50 g/10 minutes and an acidity of from 50 mg KOH/g to 110 mg KOH/g, and a second polymer having acidic side groups that has a melt flow rate of about 50 g/10 minutes to about 120 g/10 minutes and an acidity of 110 mg KOH/g to 130 mg KOH/g. The first and second polymers may be absent of ester groups.

The resin may comprise two different polymers having acidic side groups: a first polymer that is a copolymer of ethylene (e.g. 92 to 85 wt%, in some examples about 89 wt%) and acrylic or methacrylic acid (e.g. 8 to 15 wt %, in some examples about 11 wt%) having a melt flow rate of 80 to 110 g/10 minutes and a second polymer that is a co-polymer of ethylene (e.g. about 80 to 92 wt%, in some examples about 85 wt%) and acrylic acid (e.g. about 18 to 12 wt%, in some examples about 15 wt %), having a melt viscosity lower than that of the first polymer, the second polymer for example having a melt viscosity of 15000 poise or less, in some examples a melt viscosity of 10000 poise or less, in some examples 1000 poise or less, in some examples 100 poise or less, in some examples 50 poise or less, in some examples 10 poise or less. Melt viscosity can be measured using standard techniques. The melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 hz shear rate.

In any of the resins mentioned above, the ratio of the first polymer having acidic side groups to the second polymer having acidic side groups can be from about 10:1 to about 2:1. In another example, the ratio can be from about 6:1 to about 3:1, in some examples about 4:1.

The resin may comprise a polymer having a melt viscosity of 15000 poise or less, in some examples a melt viscosity of 10000 poise or less, in some examples 1000 poise or less, in some examples 100 poise or less, in some examples 50 poise or less, in some examples 10 poise or less; said polymer may be a polymer having acidic side groups as described herein. The resin may comprise a first polymer having a melt viscosity of 15000 poise or more, in some examples 20000 poise or more, in some examples 50000 poise or more, in some examples 70000 poise or more; and in some examples, the resin may comprise a second polymer having a melt viscosity less than the first polymer, in some examples a melt viscosity of 15000 poise or less, in some examples a melt viscosity of 10000 poise or less, in some examples 1000 poise or less, in some examples 100 poise or less, in some examples 50 poise or less, in some examples 10 poise or less. The resin may comprise a first polymer having a melt viscosity of more than 60000 poise, in some examples from 60000 poise to 100000 poise, in some examples from 65000 poise to 85000 poise; a second polymer having a melt viscosity of from 15000 poise to 40000 poise, in some examples 20000 poise to 30000 poise, and a third polymer having a melt viscosity of 15000 poise or less, in some examples a melt viscosity of 10000 poise or less, in some examples 1000 poise or less, in some examples 100 poise or less, in some examples 50 poise or less, in some examples 10 poise or less; an example of the first polymer is Nucrel 960 (from DuPont), and an example of the second polymer is Nucrel 699 (from DuPont), and an example of the third polymer is AC-5120 (from Honeywell). The first, second and third polymers may be polymers having acidic side groups as described herein. The melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 hz shear rate.

If the resin comprises a single type of resin polymer, the resin polymer (excluding any other components of the electrostatic ink composition) may have a melt viscosity of 6000 poise or more, in some examples a melt viscosity of 8000 poise or more, in some examples a melt viscosity of 10000 poise or more, in some examples a melt viscosity of 12000 poise or more. If the resin comprises a plurality of polymers all the polymers of the resin may together form a mixture (excluding any other components of the electrostatic ink composition) that has a melt viscosity of 6000 poise or more, in some examples a melt viscosity of 8000 poise or more, in some examples a melt viscosity of 10000 poise or more, in some examples a melt viscosity of 12000 poise or more. Melt viscosity can be measured using standard techniques. The melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 hz shear rate.

The resin may comprise two different polymers having acidic side groups that are selected from copolymers of ethylene and an ethylenically unsaturated acid of either methacrylic acid or acrylic acid; and ionomers thereof, such as methacrylic acid and ethylene-acrylic or methacrylic acid copolymers which are at least partially neutralized with metal ions (e.g. Zn, Na, Li) such as SURLYN^{®} ionomers. The resin may comprise (i) a first polymer that is a copolymer of ethylene and an ethylenically unsaturated acid of either acrylic acid or methacrylic acid, wherein the ethylenically unsaturated acid of either acrylic or methacrylic acid constitutes from about 8 wt% to about 16 wt% of the copolymer, in some examples about 10 wt% to about 16 wt% of the copolymer; and (ii) a second polymer that is a copolymer of ethylene and an ethylenically unsaturated acid of either acrylic acid and methacrylic acid, wherein the ethylenically unsaturated acid of either acrylic or methacrylic acid constitutes from about 12 wt% to about 30 wt% of the copolymer, in some examples from about 14 wt% to about 20 wt% of the copolymer, in some examples from about 16 wt% to about 20 wt% of the copolymer in some examples from about 17 wt% to about 19 wt% of the copolymer.

In some examples, the resin essentially consists of a copolymer of ethylene and methacrylic acid. In some examples the methacrylic acid of the copolymer of ethylene and methacrylic acid constitutes about 8 wt% to about 12 wt% of the copolymer, in some examples about 9 wt% to about 11 wt% of the copolymer, in some examples about 10 wt.% of the copolymer.

In an example, the resin constitutes about 5 to about 90 %, in some examples about 5 to about 80 %, by weight of the solids of the electrostatic ink composition. In another example, the resin constitutes about 10 to about 60 % by weight of the solids of the electrostatic ink composition. In another example, the resin constitutes about 15 to about 40 % by weight of the solids of the electrostatic ink composition. In another example, the resin constitutes about 60 to about 95 % by weight, in some examples from about 80 to about 90 % by weight, of the solids of the electrostatic ink composition.

The resin may comprise a polymer having acidic side groups, as described above (which may be free of ester side groups), and a polymer having ester side groups. The polymer having ester side groups is, in some examples, a thermoplastic polymer. The polymer having ester side groups may further comprise acidic side groups. The polymer having ester side groups may be a co-polymer of a monomer having ester side groups and a monomer having acidic side groups. The polymer may be a co-polymer of a monomer having ester side groups, a monomer having acidic side groups, and a monomer absent of any acidic and ester side groups. The monomer having ester side groups may be a monomer selected from esterified acrylic acid or esterified methacrylic acid. The monomer having acidic side groups may be a monomer selected from acrylic or methacrylic acid. The monomer absent of any acidic and ester side groups may be an alkylene monomer, including, for example, ethylene or propylene. The esterified acrylic acid or esterified methacrylic acid may, respectively, be an alkyl ester of acrylic acid or an alkyl ester of methacrylic acid. The alkyl group in the alkyl ester of acrylic or methacrylic acid may be an alkyl group having 1 to 30 carbons, in some examples 1 to 20 carbons, in some examples 1 to 10 carbons; in some examples selected from methyl, ethyl, iso-propyl, n-propyl, t-butyl, iso-butyl, n-butyl and pentyl.

The polymer having ester side groups may be a co-polymer of a first monomer having ester side groups, a second monomer having acidic side groups and a third monomer which is an alkylene monomer absent of any acidic and ester side groups. The polymer having ester side groups may be a co-polymer of (i) a first monomer having ester side groups selected from esterified acrylic acid or esterified methacrylic acid, in some examples an alkyl ester of acrylic or methacrylic acid, (ii) a second monomer having acidic side groups selected from acrylic or methacrylic acid and (iii) a third monomer which is an alkylene monomer selected from ethylene and propylene. The first monomer may constitute about 1 to about 50 % by weight of the co-polymer, in some examples about 5 to about 40 % by weight, in some examples 5 about to about 20 % by weight of the copolymer, in some examples about 5 to about 15 % by weight of the copolymer. The second monomer may constitute about 1 to about 50 % by weight of the co-polymer, in some examples about 5 to about 40 % by weight of the co-polymer, in some examples about 5 to about 20 % by weight of the co-polymer, in some examples about 5 to about 15 % by weight of the copolymer. In an example, the first monomer constitutes about 5 to about 40 % by weight of the co-polymer, the second monomer constitutes about 5 to about 40 % by weight of the co-polymer, and with the third monomer constituting the remaining weight of the copolymer. In an example, the first monomer constitutes about 5 to about 15 % by weight of the co-polymer, the second monomer constitutes about 5 to about 15 % by weight of the co-polymer, with the third monomer constituting the remaining weight of the copolymer. In an example, the first monomer constitutes about 8 to about 12 % by weight of the co-polymer, the second monomer constitutes about 8 to about 12 % by weight of the co-polymer, with the third monomer constituting the remaining weight of the copolymer. In an example, the first monomer constitutes about 10 % by weight of the co-polymer, the second monomer constitutes about 10 % by weight of the co-polymer, and with the third monomer constituting the remaining weight of the copolymer. The polymer having ester side groups may be selected from the Bynel ^{®} class of monomer, including Bynel 2022 and Bynel 2002, which are available from DuPont ^{®}.

The polymer having ester side groups may constitute about 1 % or more by weight of the total amount of the resin polymers in the resin, e.g. the total amount of the polymer or polymers having acidic side groups and polymer having ester side groups. The polymer having ester side groups may constitute about 5 % or more by weight of the total amount of the resin polymers in the resin, in some examples about 8 % or more by weight of the total amount of the resin polymers in the resin, in some examples about 10 % or more by weight of the total amount of the resin polymers in the resin, in some examples about 15 % or more by weight of the total amount of the resin polymers in the resin, in some examples about 20 % or more by weight of the total amount of the resin polymers in the resin, in some examples about 25 % or more by weight of the total amount of the resin polymers in the resin, in some examples about 30 % or more by weight of the total amount of the resin polymers in the resin, in some examples about 35 % or more by weight of the total amount of the resin polymers in the resin. The polymer having ester side groups may constitute from about 5% to about 50% by weight of the total amount of the resin polymers in the resin, in some examples about 10% to about 40% by weight of the total amount of the resin polymers in the resin, in some examples about 15% to about 30% by weight of the total amount of the polymers in the resin.

The polymer having ester side groups may have an acidity of 50 mg KOH/g or more, in some examples an acidity of about 60 mg KOH/g or more, in some examples an acidity of about 70 mg KOH/g or more, in some examples an acidity of about 80 mg KOH/g or more. The polymer having ester side groups may have an acidity of about 100 mg KOH/g or less, in some examples about 90 mg KOH/g or less. The polymer having ester side groups may have an acidity of about 60 mg KOH/g to about 90 mg KOH/g, in some examples about 70 mg KOH/g to about 80 mg KOH/g.

The polymer having ester side groups may have a melt flow rate of about 10 g/10 minutes to about 120 g/10 minutes, in some examples about 10 g/10 minutes to about 50 g/10 minutes, in some examples about 20 g/10 minutes to about 40 g/10 minutes, in some examples about 25 g/10 minutes to about 35 g/10 minutes.

In an example, the polymer or polymers of the resin can be selected from the Nucrel family of resins (e.g. Nucrel 403^{™}, Nucrel 407^{™}, Nucrel 609HS^{™}, Nucrel 908HS^{™}, Nucrel 1202HC^{™}, Nucrel 30707^{™}, Nucrel 1214^{™}, Nucrel 903^{™}, Nucrel 3990^{™}, Nucrel 910^{™}, Nucrel 925^{™}, Nucrel 699^{™}, Nucrel 599^{™}, Nucrel 960^{™}, Nucrel RX 76^{™}, Nucrel 2806^{™}, Bynell 2002, Bynell 2014, and Bynell 2020 (sold by E. I. du PONT)), the Aclyn family of resins (e.g. Aaclyn 201 , Aclyn 246, Aclyn 285, and Aclyn 295), and the Lotader family of resins (e.g. Lotader 2210, Lotader, 3430, and Lotader 8200 (sold by Arkema)).

### Aluminium-based color-shifting pigment

The liquid electrostatic ink composition comprises an aluminium-based color-shifting pigment. Aluminium-based color-shifting pigments can be based on metallic aluminium, or alumina. In some examples, the aluminium-based color-shifting pigments comprise an aluminium or alumina core. In some examples, aluminium-based color-shifting pigments comprise a non-aluminium core but have an aluminium-based surface modification or coating.

In some examples, the aluminium-based color-shifting pigments comprise an aluminium or alumina core which is itself translucent, or colourless, and it is the surface structuring of the outer surface of the pigment (or coating thereon) that imparts the color-shifting properties.

In some examples, the aluminium-based color-shifting pigment comprises a coating of metal oxide or metal salt on an aluminium-based core. In some examples, the aluminium-based color-shifting pigment comprises a coating of a metal salt. In some examples, the aluminium-based color-shifting pigment comprises a coating of a crystalline salt.

In some examples, the aluminium-based color-shifting pigment comprises an alumina-based color-shifting pigment. In some examples, the aluminium-based color-shifting pigment comprises alumina flakes. In some examples, the aluminium-based color-shifting pigment comprises alumina flakes coated with a metal oxide. In some examples, the aluminium-based color-shifting pigment comprises alumina flakes coated with titanium oxide or iron oxide. In some examples, the aluminium-based color-shifting pigment comprises alumina flakes coated with a metal oxide coating having a thickness in the range of from 40 to 160 nm, for example from 60 to 80nm, from 80 to 100nm, from 100-140nm or from 120-160nm. The thickness of the metal oxide coating can dictate the color-shifting properties of the pigment.

In some examples, the aluminium-based color-shifting pigment comprises alumina flakes coated with a crystalline salt. In some examples, the aluminium-based color-shifting pigment comprises alumina flakes coated with a metal salt. In some examples, the aluminium-based color-shifting pigment comprises alumina flakes coated with magnesium fluoride. In some examples, the aluminium-based color-shifting pigment comprises alumina flakes coated with a metal salt coating having a thickness in the range of from 40 to 160 nm, for example from 60 to 80nm, from 80 to 100nm, from 100-140nm or from 120-160nm.

In some examples, the aluminium-based color-shifting pigment comprises flakes of a multi-layered thin-film having an aluminium core. In some examples, the aluminium-based color-shifting pigment comprises flakes of a multi-layered thin-film having an aluminium core coated with magnesium fluoride. In some examples, the aluminium-based color-shifting pigment comprises flakes of a multi-layered thin-film having an aluminium core coated with magnesium fluoride and an external coating of chromium. In some examples, the aluminium-based color-shifting pigment comprises a multi-layered thin film having an aluminium core coated with a metal salt coating having a thickness in the range of from 40 to 160 nm, for example from 60 to 80nm, from 80 to 100nm, from 100-140nm or from 120-160nm.

In some examples, the aluminium-based color-shifting pigment comprises aluminium, iron and silica. In some examples, the aluminium-based color-shifting pigment comprises a silica flake coated with aluminium. In some examples, the aluminium-based color-shifting pigment comprises a silica flake coated with aluminium and iron. In some examples, the aluminium-based color-shifting pigment comprises a mixture of aluminium, iron and silica.

In some examples, the pigment - prior to formulating an ink composition using the pigment - has a particle size (d₅₀) of from 5 to 150 µm, for example from 15 to 150 µm, for example from 25 to 100 µm, for example from 35 to 50 µm.

In some examples, the color-shifting aluminium-based pigment is formed by physical vapor deposition or as a vacuum metallized pigment so as to produce thin films which are subsequently ground into pigment flakes having a particle size (d₅₀) as described above.

Examples of aluminium-based color-shifting pigments include the Chromashift range of products from Kolortek, Multiflect^{®} Wave20, Wave35 and Wave150 from Schlenk, and the Chromaflair^{®} products from Viavi.

In some examples, the pigment(s) constitutes a certain wt%, e.g. from about 1 wt%, to about 60 wt%, in some examples from about 20 wt.% to about 50 wt.%, of the solids of the electrostatic ink composition, and the remaining wt% of the solids of the electrostatic ink composition is formed by the resin and, in some examples, any other additives that are present. The other additives may constitute about 10 wt% or less of the solids of the electrostatic ink composition, in some examples about 5 wt% or less of the solids of the electrostatic ink composition, in some examples about 3 wt% or less of the solids of the electrostatic ink composition. In some examples, the resin may constitute about 5 % to about 99 % by weight of the solids in the electrostatic ink composition, in some examples about 50 % to about 90 % by weight of the solids of the electrostatic ink composition, in some examples about 70 % to about 90 % by weight of the solids of the electrostatic ink composition. The remaining wt% of the solids in the ink composition may be a pigment(s) and, in some examples, any other additives that may be present.

### Charge Director

In some examples, the electrostatic ink composition includes a charge director.

The charge director may be added in order to impart and/or maintain sufficient electrostatic charge on ink particles during electrostatic printing, which may be chargeable particles comprising a thermoplastic resin comprising a copolymer of an alkylene monomer and an ethylenically unsaturated monomer comprising an epoxide. The charge director may comprise ionic compounds, particularly metal salts of fatty acids, metal salts of sulfo-succinates, metal salts of oxyphosphates, metal salts of alkyl-benzenesulfonic acid, metal salts of aromatic carboxylic acids or sulfonic acids, as well as zwitterionic and non-ionic compounds, such as polyoxyethylated alkylamines, lecithin, polyvinylpyrrolidone, organic acid esters of polyvalent alcohols, and the like. The charge director can be selected from, but is not limited to, oil-soluble petroleum sulfonates (e.g., neutral Calcium Petronate^{™}, neutral Barium Petronate^{™}, and basic Barium Petronate^{™}), polybutylene succinimides (e.g., OLOA^{™} 1200 and Amoco 575), and glyceride salts (e.g., sodium salts of phosphated mono- and diglycerides with unsaturated and saturated acid substituents), sulfonic acid salts including, but not limited to, barium, sodium, calcium, and aluminium salts of sulfonic acid. The sulfonic acids may include, but are not limited to, alkyl sulfonic acids, aryl sulfonic acids, and sulfonic acids of alkyl succinates. The charge director can impart a negative charge or a positive charge on the chargeable particles of an electrostatic ink composition.

In some examples, the electrostatic ink composition comprises a charge director comprising a simple salt. Simple salts are salts that do not form micelles by themselves, although they may form a core for micelles with a micelle forming salt. The ions constructing the simple salts are all hydrophilic. The simple salt may include a cation selected from the group consisting of Mg, Ca, Ba, NH₄, tert-butyl ammonium, Li⁺, and Al³⁺, or from any sub-group thereof. The simple salt may include an anion selected from the group consisting of SO₄²⁻, PO³⁻, NO³⁻, HPO₄²⁻, CO₃²⁻, acetate, trifluoroacetate (TFA), Cl⁻, BF₄⁻, F⁻, ClO₄⁻, and TiO₃⁴⁻, or from any sub-group thereof. The simple salt may be selected from CaCO₃, Ba₂TiO₃, Al₂(SO₄), Al(NO₃)₃, Ca₃(PO₄)₂, BaSO₄, BaHPO₄, Ba₂(PO₄)₃, CaSO₄, (NH₄)₂CO₃, (NH₄)₂SO₄, NH₄OAc, tert-butyl ammonium bromide, NH₄NO₃, LiTFA, Al₂(SO₄)₃, LiClO₄ and LiBF₄, or any sub-group thereof.

The charge director may include at least one of (i) soya lecithin, (ii) a barium sulfonate salt, such as basic barium petronate (BBP), and (iii) an isopropyl amine sulfonate salt. Basic barium petronate is a barium sulfonate salt of a C21-26 hydrocarbon alkyl, and can be obtained, for example, from Chemtura. An example isopropyl amine sulfonate salt is dodecyl benzene sulfonic acid isopropyl amine, which is available from Croda.

In some examples, the electrostatic ink composition comprises a charge director comprising a sulfosuccinate salt of the general formula MAₙ, wherein M is a metal, n is the valence of M, and A is an ion of the general formula (I):

(I) [R¹-O-C(O)CH₂CH(SO₃)C(O)-O-R²]⁻

wherein each of R¹ and R² is an alkyl group.

The sulfosuccinate salt of the general formula MAₙ is an example of a micelle forming salt. The charge director may be substantially free of or free of an acid of the general formula HA, where A is as described above. The charge director may include micelles of said sulfosuccinate salt enclosing at least some of the nanoparticles. The charge director may include at least some nanoparticles having a size of 200 nm or less, and/or, in some examples, 2 nm or more.

In the formula [R¹-O-C(O)CH₂CH(SO₃⁻)C(O)-O-R²], in some examples, each of R¹ and R² is an aliphatic alkyl group. In some examples, each of R¹ and R² independently is a C3 to C30 alkyl, for example, C6-25 alkyl, C10 to C20 alkyl or C11 to C15 alkyl. In some examples,R¹ and R² are both C13 alkyl. In some examples, said aliphatic alkyl group is linear. In some examples, said aliphatic alkyl group is branched. In some examples, said aliphatic alkyl group includes a linear chain of more than 6 carbon atoms. In some examples, R¹ and R² are the same or different. In some examples, R¹ and R² are the same. In some examples, at least one of R¹ and R² is C₁₃H₂₇. In some examples, M is Na, K, Cs, Ca, or Ba.

In some examples, the charge director constitutes about 0.001 to 20% by weight, in some examples, 0.01 to 20% by weight, in some examples, 0.01 to 10% by weight, in some examples, 0.01 to 1% by weight of the solids of the electrostatic ink composition. In some examples, the charge director constitutes about 0.001 to 0.15% by weight of the solids of the electrostatic ink composition, in some examples, 0.001 to 0.15%, in some examples, 0.001 to 0.02% by weight of the solids of the electrostatic ink composition, in some examples, 0.1 to 2% by weight of the solids of the electrostatic ink composition, in some examples, 0.2 to 1.5% by weight of the solids of the electrostatic ink composition, in some examples, 0.1 to 1% by weight of the solids of the electrostatic ink composition, in some examples, 0.2 to 0.8% by weight of the solids of the electrostatic ink composition. In some examples, the charge director is present in an amount of at least 1 mg of charge director per gram of the liquid electrostatic ink composition (which will be abbreviated to mg/g), in some examples, at least 2 mg/g, in some examples, at least 3 mg/g, in some examples, at least 4 mg/g, in some examples, at least 5 mg/g. In some examples, the charge director is present in an amount of from 1 mg to 50 mg of charge director per gram of the liquid electrostatic ink composition (which will be abbreviated to mg/g), in some examples, from 1 mg/g to 25 mg/g, in some examples, from 1 mg/g to 20 mg/g, in some examples, from 1 mg/g to 15 mg/g, in some examples, from 1 mg/g to 10 mg/g, in some examples, from 3 mg/g to 20 mg/g, in some examples, from 3 mg/g to 15 mg/g, in some examples, from 5 mg/g to 10 mg/g.

In some examples, a sulfosuccinate salt based charge director may provide better charging stability than a charge director containing an amine (for example, the charge director comprising a mixture of soya lecithin, a barium sulfonate salt and an isopropyl amine sulfonate salt), thus prolonging the lifespan of the charged electrostatic ink composition. In some examples, the charging stability is not affected by the presence of an amine in the charge director.

### Charge adjuvant

In some examples, the electrostatic ink composition includes a charge adjuvant.

A charge adjuvant may promote charging of the chargeable particles when a charge director is present in the electrostatic ink composition during printing. The charge adjuvant can include, but is not limited to, barium petronate, calcium petronate, Co salts of naphthenic acid, Ca salts of naphthenic acid, Cu salts of naphthenic acid, Mn salts of naphthenic acid, Ni salts of naphthenic acid, Zn salts of naphthenic acid, Fe salts of naphthenic acid, Ba salts of stearic acid, Co salts of stearic acid, Pb salts of stearic acid, Zn salts of stearic acid, Al salts of stearic acid, Zn salts of stearic acid, Cu salts of stearic acid, Pb salts of stearic acid, Fe salts of stearic acid, metal carboxylates (e.g., Al tristearate, Al octanoate, Li heptanoate, Fe stearate, Fe distearate, Ba stearate, Cr stearate, Mg octanoate, Ca stearate, Fe naphthenate, Zn naphthenate, Mn heptanoate, Zn heptanoate, Ba octanoate, Al octanoate, Co octanoate, Mn octanoate, and Zn octanoate), Co lineolates, Mn lineolates, Pb lineolates, Zn lineolates, Ca oleates, Co oleates, Zn palmirate, Ca resinates, Co resinates, Mn resinates, Pb resinates, Zn resinates, AB diblock copolymers of 2-ethylhexyl methacrylate-co-methacrylic acid calcium and ammonium salts, copolymers of an alkyl acrylamidoglycolate alkyl ether (e.g., methyl acrylamidoglycolate methyl ether-co-vinyl acetate), and hydroxy bis(3,5-di-tert-butyl salicylic) aluminate monohydrate. In an example, the charge adjuvant is or includes aluminium di- or tristearate. The charge adjuvant may be present in an amount of about 0.1 to 5% by weight, in some examples, about 0.1 to 1% by weight, in some examples, about 0.3 to 0.8% by weight of the solids of the electrostatic ink composition, in some examples, about 1 to 3% by weight of the solids of the electrostatic ink composition, in some examples, about 1.5 to 2.5% by weight of the solids of the electrostatic ink composition.

In some examples, the electrostatic ink composition further includes, for example, as a charge adjuvant, a salt of a multivalent cation and a fatty acid anion. The salt of a multivalent cation and a fatty acid anion can act as a charge adjuvant. The multivalent cation may, in some examples, be a divalent or a trivalent cation. In some examples, the multivalent cation is selected from Group 2, transition metals, Group 3 and Group 4 in the Periodic Table. In some examples, the multivalent cation includes a metal selected from Ca, Sc, Ti, V, Cr, Mn, Fe, Co, Ni, Cu, Zn, Al and Pb. In some examples, the multivalent cation is Al³⁺. The fatty acid anion may be selected from a saturated or unsaturated fatty acid anion. The fatty acid anion may be selected from a C8 to C26 fatty acid anion, in some examples, a C14 to C22 fatty acid anion, in some examples, a C16 to C20 fatty acid anion, in some examples, a C17, C18 or C19 fatty acid anion. In some examples, the fatty acid anion is selected from a caprylic acid anion, capric acid anion, lauric acid anion, myristic acid anion, palmitic acid anion, stearic acid anion, arachidic acid anion, behenic acid anion and cerotic acid anion.

The charge adjuvant, which may, for example, be or include a salt of a multivalent cation and a fatty acid anion, may be present in an amount of 0.1 wt.% to 5 wt.% of the solids of the electrostatic ink composition, in some examples, in an amount of 0.1 wt.% to 2 wt.% of the solids of the electrostatic ink composition, in some examples, in an amount of 0.1 wt.% to 2 wt.% of the solids of the electrostatic ink composition, in some examples, in an amount of 0.3 wt.% to 1.5 wt.% of the solids of the electrostatic ink composition, in some examples, about 0.5 wt.% to 1.2 wt.% of the solids of the electrostatic ink composition, in some examples, about 0.8 wt.% to 1 wt.% of the solids of the electrostatic ink composition, in some examples, about 1 wt.% to 3 wt.% of the solids of the electrostatic ink composition, in some examples, about 1.5 wt.% to 2.5 wt.% of the solids of the electrostatic ink composition.

### Additives

The magenta ink composition whether it is formulated as an electrostatic ink composition or an inkjet ink composition may include an additive or a plurality of additives. The additive or plurality of additives may be added at any stage of the method of producing the ink composition. The additive or plurality of additives may be selected from a wax, biocides, organic solvents, viscosity modifiers, materials for pH adjustment, sequestering agents, preservatives, compatibility additives, emulsifiers and the like. The wax may be an incompatible wax. As used herein, "incompatible wax" may refer to a wax that is incompatible with the resin. Specifically, the wax phase separates from the resin phase upon the cooling of the resin fused mixture on a print substrate during and after the transfer of the ink film to the print substrate, for example, from an intermediate transfer member, which may be a heated blanket.

### Method of producing the liquid electrostatic ink composition

Also provided is a method of producing a liquid electrostatic ink composition as described herein. The method may comprise:
combining a resin, an aluminium-based color-shifting pigment, and a liquid carrier.

The method of combining the resin, aluminium-based color-shifting pigment and liquid carrier may be any method typically used to prepare liquid electrostatic ink compositions. For example, the method may comprise preparing chargeable particles by combining resin and aluminium-based color-shifting pigment in the presence of liquid carrier, under conditions that result in at least partial encapsulation of the aluminium-based color-shifting pigment by the resin, thereby producing the chargeable particles. In some examples, the method may comprise preparing the liquid electrostatic ink composition by combining resin and aluminium-based color-shifting pigment in the presence of liquid carrier, under conditions that result in at least partial encapsulation of the aluminium-based color-shifting pigment by the resin, thereby producing the liquid electrostatic ink composition. In some examples, the method comprises forming ink particles comprising the resin and the pigment, and dispersing the ink particles in the carrier liquid to form the liquid electrostatic ink composition.

In some examples, forming the ink particles comprises grinding the resin and pigment(s) in the presence of a carrier liquid. In some examples, the resin and pigment(s) are ground in the present of a carrier liquid and a charge adjuvant such as VCA. In some examples, additional carrier liquid may then be added to the composition. In some examples, the method comprises adding a charge director to the composition comprising ink particles dispersed in a carrier liquid.

In some examples, grinding the resin and pigment(s) in the presence of a carrier liquid comprises grinding at a non-volatile solids content (based on the total weight of the composition being ground) of 20 wt%. In some examples, grinding the resin and pigment(s) in the presence of a carrier liquid comprises grinding for at least one hour, for example at least 1.5 hours, for example at least 3 hours or until such a time as a desired particle size is obtained. In some examples, grinding the resin and pigment(s) in the presence of a carrier liquid comprises grinding at a temperature of from 40 °C to 45 °C.

Grinding of pigments with resins to produce ink particles can be performed using any commercial grinding equipment, for example attritors such as the S0 attritor from Union Process. The grinding may be carried out using a metallic grinding media, or a non-metallic grinding media. The grinding media may be or comprise carbon steel, or chrome steel, or stainless steel, or steel shot. The grinding media may be or comprise alumina or other ceramic material such as glass mullite silicon carbide silicon nitride, tungsten carbide zirconium oxide, or zirconium silicate. The grinding media may be or comprise spherical or substantially spherical media, satellites or radius-end cylinders. Satellites will be understood as being substantially spherical with a protruding band around the circumference. The grinding media may be 35 mm or less in diameter, 31 mm or less in diameter, 30 mm or less in diameter, for example 26 mm or less, 25 mm or less, 15 mm or less, 12.7 mm or less in diameter, 10 mm or less, for example 9.5 mm or less, 7.9 mm or less, 5.6 mm or less, 6.4 mm or less, 3.9 mm or less, 3.2 mm or less, 2.4 mm or less, 2mm or less, for example 1.7 mm or less, 1.4 mm or less, 1 mm or less, 1.18 mm or less, 0.7 mm or less, 0.6 mm or less, 0.5 mm or less, 0.4 mm or less, or 0.25 mm or less in diameter.

In some examples, forming the ink particles comprises: combining the resin, pigment(s) and carrier liquid to form a precursor composition, and heating the precursor composition so as to soften, dissolve or disperse the resin in the liquid carrier, and then then cooling the composition such that the resin at least partially encapsulates the pigment(s), thereby forming the ink particles.

In some examples, forming the electrostatic ink composition comprises: combining the resin, pigment(s) and carrier liquid to form a precursor composition, and heating the precursor composition so as to soften, dissolve or disperse the resin in the liquid carrier, and then then cooling the composition such that the resin at least partially encapsulates the pigment(s), thereby forming the electrostatic ink composition.

In some examples, the method of producing the liquid electrostatic ink composition involves heating a dispersion of a polymer resin in a carrier liquid to dissolve the polymer resin. In some examples, the polymer resin is insoluble in the carrier liquid at room temperature but soluble in the carrier liquid at elevated temperatures, for example at a temperature of at least 50 °C, for example at a temperature of at least 60 °C, for example at a temperature of at least 70 °C, for example at a temperature of at least 80 °C, for example at a temperature of at least 90 °C, for example at a temperature of at least 100 °C, for example at a temperature of at least 110 °C, for example at a temperature of at least 120 °C. The dispersion of the polymer resin in the carrier liquid may be heated to any of the above stated temperatures for sufficient time until the polymer resin has dissolved. Dissolution may be confirmed by the carrier liquid appearing clear and homogenous. In some examples, the dispersion of polymer resin in the carrier fluid may be mixed at a rate of less than 500 rpm, for example less than 400 rpm, for example less than 300 rpm, for example less than 200 rpm until dissolution is complete. In some examples, the dispersion of polymer resin in the carrier fluid may be mixed at a rate of about 400 rpm. In some examples, heating a dispersion of polymer resin in carrier liquid causes the polymer resin to liquid well with carrier liquid. In some examples, the dispersion of polymer resin in carrier fluid is heated to swell the polymer resin. Swelling of the polymer resin allows better encapsulation of the pigment particle.

In some examples, the aluminium-based color-shifting pigment particles may be suspended in the carrier liquid before any cooling occurs, for example at the temperature at which dissolution of the polymer resin in the carrier liquid was carried out. In some examples, the carrier liquid may be cooled to an intermediate temperature before the pigment particles are suspended in the carrier liquid. The intermediate temperature may be any temperature above the cloud point of the solution comprising the carrier liquid and the dissolved polymer liquid. The cloud point of any given carrier liquid-polymer resin system can be readily determined by heating and slowly cooling the solution and is the temperature at which dissolved solids begin to precipitate, giving a phase separation and a cloudy or turbid appearance. In some examples, the solution comprising the carrier liquid and the dissolved polymer resin is cooled to at least 2 °C, for example at least 3°C, for example at least 4°C, for example at least 5°C, for example at least 6°C, for example at least 7°C, for example at least 8°C, for example at least 9°C, for example at least 10°C above the cloud point before the pigment particle is suspended in the carrier liquid.

In some examples, the pigment particles are mixed into the solution of the polymer resin dissolved in the carrier liquid at a shear rate of 12 000 rpm or less, for example 11 000 rpm or less, for example 10 000 rpm or less, for example 9000 rpm or less for example 8000 rpm or less to ensure complete dispersion before the precipitation of the polymer resin is effected. In other examples, the pigment particles are mixed into the solution of the polymer resin dissolved in the carrier liquid at a shear rate of 100 rpm or less, for example 90 rpm or less, for example 80 rpm or less, for example 70 rpm or less, for example 60 rpm or less, for example 50 rpm or less to ensure complete dispersion before the precipitation of the polymer resin is effected. In some examples, following dispersion of the pigment particles at a low shear rate, the rate of mixing may be increased to less than 100 rpm, for example less than 90 rpm, for example less than 80 rpm, for example 70 rpm or less. In some examples, following dispersion of the pigment particles, the rate of mixing may be lowered to less than 500 rpm, for example less than 400 rpm, for example less than 300 rpm, for example less than 200 rpm, for example 100 rpm or less, for example less than 90 rpm, for example less than 80 rpm, for example less than 70 rpm, for example less than 60 rpm, for example 50 rpm or less while precipitation is effected.

The precipitation is effected by controlling the cooling of the system such that solubility of the resin in the carrier liquid is reduced and precipitation of the resin occurs. In some examples, the temperature of the carrier fluid is lowered through a controlled cooling process at a given rate. For example, after addition of the pigment particles, the temperature of the carrier fluid may be lowered at a rate of less than 10 °C per hour, for example less than 9 °C per hour, for example less than 7 °C per hour, for example about 6 °C per hour.

### Examples

The following illustrates examples of the compositions and related aspects described herein. Thus, these examples should not be considered to restrict the present disclosure, but are merely in place to teach how to make examples of compositions of the present disclosure.

### Materials

### Resins:

Nucrel^{®} 599 (available from DuPont^{™}): an ethylene-methacrylic acid copolymer with nominally 10 wt% methacrylic acid.

### Carrier Liquid:

Isopar L (available form EXXON): an isoparafinic oil.

### Charge Adjuvant:

VCA (available from Sigma-Aldrich): an aluminium tristearate and palmitate salt.

### Charge Director:

NCD: a natural charge director having the components (i) natural soya lecithin, (ii) basic barium petronate, and (iii) dodecyl benzene sulphonic acid, amine salt, with the components (i), (ii) and (iii) being present in the weight ratios of 6.6%:9.8:3.6%.

### Pigments:

SpectraFlair Silver 1500-14 (available from Viavi): magnesium fluoride coated alumina flakes which are transparent over a wide range of wavelengths

KT-GRB525 (available from Kolortek): a special effect chromashift pearlescent pigment comprising aluminium, iron and silica.

Multiflect^{®} Wave20, Wave35 and Wave150 (available from Schlenk): polychromatic pigments based on structured multilayer films having an aluminium core.

### Precipitation procedure

### Paste preparation for precipitation process:

A paste was formed by heating the resin (with 10 wt% VCA) in the presence of a carrier liquid (Isopar L) in a Ross mixer (Model DPM-2, obtained from Charles Ross & Son Company-Hauppauge NY) to 35 °C while mixing at 165 rpm. The system was then cooled to room temperature over 700 minutes with stirring at 50 rpm. A paste was obtained.

### Precipitation process:

The paste added to the reactor and heated at 120 °C to allow paste swelling. The swollen paste was cooled to the cloud point and 50 wt% of the pigment solids was added. The system continued to be cooled at a rate of 5 °C/30 min to 50 °C. The system was diluted by 300 gram Isopar and then cooled to room temperature over 120 min with stirring at 3000 rpm. An ink was obtained.

### General grinding procedure

Pigment was ground with resin at a pigment loading level of 15-20 wt% in the presence of 2.5 wt.% VCA at a 20% NVS content in Isopar L in a ceramic attritor (Union Process Attritor system - a batch-type Szegvari attritor system with a mill size of 1 gallon) for 1.5hr or 3hr.

The precipitated or ground material was then diluted with Isopar L to form a 2 wt.% NVS working dispersion.

### Example 1

A liquid electrophotographic (LEP) ink was formulated using SpectraFlair 1500-14 as the pigment in the precipitation procedure described above and NCD was added in an amount of 50 mg/g LEP ink composition.

### Example 2

A liquid electrophotographic (LEP) ink was formulated using Multiflect^{®} Wave35 as the pigment in the precipitation procedure described above and NCD was added in an amount of 50 mg/g LEP ink composition.

### Example 3

A liquid electrophotographic (LEP) ink was formulated using Kolortek KT-GRB525 (particle size 5-25 µm) as the pigment in the precipitation procedure described above and NCD was added in an amount of 50 mg/g LEP ink composition.

### Example 4

A liquid electrophotographic (LEP) ink was formulated using SpectraFlair 1500-14 as the pigment in the grinding procedure described above and NCD was added in an amount of 50 mg/g LEP ink composition.

### Example 5

A liquid electrophotographic (LEP) ink was formulated using Kolortek KT-GRB525 (particle size 5-25 µm) as the pigment in the grinding procedure described above and NCD was added in an amount of 50 mg/g LEP ink composition.

### Example 6

A liquid electrophotographic (LEP) ink was formulated using Multiflect^{®} Wave35 as the pigment in the grinding procedure described above and NCD was added in an amount of 50 mg/g LEP ink composition

Each of the liquid electrophotographic inks produced in Examples 1-6 was plated onto standard paper using a conductivity meter, and also printed onto a paper substrate (Condat 130 gsm) using an Indigo 6X00 web LEP printing press, with a working NVS content (in the ink tank) of 3%.

The following test was also performed on each in order to characterize the ink before printing in press:
- Particle Charge PC (Level and Spikes), Low Field Conductivity (LF), High Field Conductivity (HF) and DC (Direct Current Conductivity);

Low field conductivity is the electrical conductivity of Electrolnk measured at the following conditions:
- Electrical field amplitude: 5 - 15 V/mm
- Frequency: 5 - 15 Hz
- Temperature: 23 +/- 2 C

High field conductivity is the maximum electrical conductivity of Electrolnk measured at the following conditions:
- Electrical field pulse:
   Shape: Rectangular
   Height: 1500 V/mm
   Duration: 8 sec
   Rise time: 1 ms or less
   Ripple: 10 V/mm or less
- Sampling frequency: 1000 per second
- Temperature: 23 +/- 2 C

DC (direct current) conductivity is the average conductivity measured between 6.4 and 7.2 seconds.

Particle conductivity is the difference between the High field conductivity and the low field conductivity.

Characterization of selected inks is shown in Table 1.

**Table 1**

| | Precipitation | | Grinding | |
|---|---|---|---|---|
| Pigment | Kolortek KT-GRB525 | Multiflect Wave35 | Kolortek KT-GRB525 | Multiflect Wave35 |
| Pigment Particle Conductivity in Isopar L (phmo) | 700 | 30 | N/A | N/A |
| Visual effect from plating | Good visual color shifting | Good visual color shifting | Good visual color shifting | Good visual color shifting |
| Ink Particle size distribution (d50/ µm) | 14 | 25 | 5 | 5 |
| Ink Particle size distribution (Tail 20%/ µm) | 32 | 52 | 3 | 14 |
| Charging conductivity (spikes) (phmo) | 98 | 193 | 343 | 278 |

It was found that all samples produced good color-shifting effects and were able to be printed using the LEP printing press. Grinding of the color-shifting pigments reduced average particle size and reduced the ink glittering quality. However, the color-shifting effect was undiminished. Thus, color-shifting liquid electrostatic ink compositions can conveniently be produced by standard grinding means without disruption of the complex multilayer structures which give rise to the interference properties.

## Claims

1. A liquid electrostatic ink composition, comprising:
a liquid carrier; and
chargeable toner particles comprising a resin and an aluminium-based color-shifting pigment.

2. A liquid electrostatic ink composition according to claim 1, wherein the aluminium-based color-shifting pigment comprises alumina flakes.

3. A liquid electrostatic ink composition according to claim 1, wherein the aluminium-based color-shifting pigment comprises alumina flakes coated with a metal oxide.

4. A liquid electrostatic ink composition according to claim 1, wherein the aluminium-based color-shifting pigment comprises alumina flakes coated with titanium oxide or iron oxide.

5. A liquid electrostatic ink composition according to claim 1, wherein the aluminium-based color-shifting pigment comprises alumina flakes coated with a metal oxide coating having a thickness in the range of from 40 to 160 nm.

6. A liquid electrostatic ink composition according to claim 1, wherein the aluminium-based color-shifting pigment comprises alumina flakes coated with a crystalline salt.

7. A liquid electrostatic ink composition according to claim 1, wherein the aluminium-based color-shifting pigment comprises alumina flakes coated with magnesium fluoride.

8. A liquid electrostatic ink composition according to claim 1, wherein the aluminium-based color-shifting pigment comprises flakes of a multi-layered thin-film having an aluminium core.

9. A liquid electrostatic ink composition according to claim 1, wherein the aluminium-based color-shifting pigment comprises flakes of a multi-layered thin-film having an aluminium core coated with magnesium fluoride.

10. A liquid electrostatic ink composition according to claim 1, wherein the aluminium-based color-shifting pigment comprises flakes of a multi-layered thin-film having an aluminium core coated with magnesium fluoride and an external coating of chromium.

11. A liquid electrostatic ink composition according to claim 1, wherein the aluminium-based color-shifting pigment comprises aluminium, iron and silica.

12. A liquid electrostatic ink composition according to claim 1, wherein the resin comprises comprises a copolymer of an alkylene monomer and a (meth)acrylic acid monomer.

13. A method of printing, comprising:
printing onto a substrate a liquid electrostatic ink composition, the composition comprising:
a liquid carrier; and
chargeable toner particles comprising a resin and an aluminium-based color-shifting pigment.

14. A printed article comprising:
a print substrate, having printed thereon an electrostatic ink composition comprising chargeable toner particles comprising a resin and an aluminium-based color-shifting pigment.

15. A printed article according to claim 14, wherein the printed article is a bank note or a tamper-proof label.

## Patentansprüche

1. Flüssige elektrostatische Tintenzusammensetzung, die umfasst:
einen flüssigen Träger; und
aufladbare Tonerpartikel, die ein Harz und ein Farbverschiebungspigment auf Aluminiumbasis umfassen.

2. Flüssige elektrostatische Tintenzusammensetzung nach Anspruch 1, wobei das Farbverschiebungspigment auf Aluminiumbasis Aluminiumoxidflocken umfasst.

3. Flüssige elektrostatische Tintenzusammensetzung nach Anspruch 1, wobei das Farbverschiebungspigment auf Aluminiumbasis Aluminiumoxidflocken, die mit einem Metalloxid beschichtet sind, umfasst.

4. Flüssige elektrostatische Tintenzusammensetzung nach Anspruch 1, wobei das Farbverschiebungspigment auf Aluminiumbasis Aluminiumoxidflocken, die mit Titanoxid oder Eisenoxid beschichtet sind, umfasst.

5. Flüssige elektrostatische Tintenzusammensetzung nach Anspruch 1, wobei das Farbverschiebungspigment auf Aluminiumbasis Aluminiumoxidflocken umfasst, die mit einer Metalloxidbeschichtung, die eine Dicke in dem Bereich von 40 bis 160 nm aufweist, beschichtet sind.

6. Flüssige elektrostatische Tintenzusammensetzung nach Anspruch 1, wobei das Farbverschiebungspigment auf Aluminiumbasis Aluminiumoxidflocken, die mit einem kristallinen Salz beschichtet sind, umfasst.

7. Flüssige elektrostatische Tintenzusammensetzung nach Anspruch 1, wobei das Farbverschiebungspigment auf Aluminiumbasis Aluminiumoxidflocken, die mit Magnesiumfluorid beschichtet sind, umfasst.

8. Flüssige elektrostatische Tintenzusammensetzung nach Anspruch 1, wobei das Farbverschiebungspigment auf Aluminiumbasis Flocken einer mehrlagigen Dünnfolie, die einen Aluminiumkern aufweist, umfasst.

9. Flüssige elektrostatische Tintenzusammensetzung nach Anspruch 1, wobei das Farbverschiebungspigment auf Aluminiumbasis Flocken einer mehrlagigen Dünnfolie umfasst, die einen Aluminiumkern, der mit Magnesiumfluorid beschichtet ist, aufweist.

10. Flüssige elektrostatische Tintenzusammensetzung nach Anspruch 1, wobei das Farbverschiebungspigment auf Aluminiumbasis Flocken einer mehrlagigen Dünnfolie umfasst, die einen Aluminiumkern, der mit Magnesiumfluorid beschichtet ist, und eine äußere Beschichtung aus Chrom aufweist.

11. Flüssige elektrostatische Tintenzusammensetzung nach Anspruch 1, wobei das Farbverschiebungspigment auf Aluminiumbasis Aluminium, Eisen und Siliciumdioxid umfasst.

12. Flüssige elektrostatische Tintenzusammensetzung nach Anspruch 1, wobei das Harz ein Copolymer aus einem Alkylenmonomer und einem (Meth)acrylsäuremonomer umfasst umfasst.

13. Verfahren zum Drucken, das umfasst:
Drucken einer flüssigen elektrostatischen Tintenzusammensetzung auf ein Substrat, wobei die Zusammensetzung umfasst:
einen flüssigen Träger; und
aufladbare Tonerpartikel, die ein Harz und ein Farbverschiebungspigment auf Aluminiumbasis umfassen.

14. Gedrucktes Erzeugnis, das umfasst:
ein Drucksubstrat, das eine darauf gedruckte elektrostatische Tintenzusammensetzung aufweist, die aufladbare Tonerpartikel, die ein Harz und ein Farbverschiebungspigment auf Aluminiumbasis umfassen, umfasst.

15. Gedrucktes Erzeugnis nach Anspruch 14, wobei das gedruckte Erzeugnis eine Banknote oder ein fälschungssicheres Etikett ist.

## Revendications

1. Composition d'encre électrostatique liquide comprenant :
un support liquide ; et
des particules de toner chargeable comprenant une résine et un pigment à décalage de couleur à base d'aluminium.

2. Composition d'encre électrostatique liquide selon la revendication 1, dans laquelle le pigment à décalage de couleur à base d'aluminium comprend des paillettes d'alumine.

3. Composition d'encre électrostatique liquide selon la revendication 1, dans laquelle le pigment à décalage de couleur à base d'aluminium comprend des paillettes d'alumine revêtues d'un oxyde métallique.

4. Composition d'encre électrostatique liquide selon la revendication 1, dans laquelle le pigment à décalage de couleur à base d'aluminium comprend des paillettes d'alumine revêtues d'oxyde de titane ou d'oxyde de fer.

5. Composition d'encre électrostatique liquide selon la revendication 1, dans laquelle le pigment à décalage de couleur à base d'aluminium comprend des paillettes d'alumine revêtues d'un revêtement d'oxyde métallique présentant une épaisseur dans la plage allant de 40 à 160 nm.

6. Composition d'encre électrostatique liquide selon la revendication 1, dans laquelle le pigment à décalage de couleur à base d'aluminium comprend des paillettes d'alumine enrobées d'un sel cristallin.

7. Composition d'encre électrostatique liquide selon la revendication 1, dans laquelle le pigment à décalage de couleur à base d'aluminium comprend des paillettes d'alumine revêtues de fluorure de magnésium.

8. Composition d'encre électrostatique liquide selon la revendication 1, dans laquelle le pigment à décalage de couleur à base d'aluminium comprend des paillettes d'un film multicouche présentant un noyau d'aluminium.

9. Composition d'encre électrostatique liquide selon la revendication 1, dans laquelle le pigment à décalage de couleur à base d'aluminium comprend des paillettes d'un film multicouche présentant un noyau d'aluminium revêtu de fluorure de magnésium.

10. Composition d'encre électrostatique liquide selon la revendication 1, dans laquelle le pigment à décalage de couleur à base d'aluminium comprend des paillettes d'un film multicouche présentant un noyau d'aluminium revêtu de fluorure de magnésium et un revêtement externe de chrome.

11. Composition d'encre électrostatique liquide selon la revendication 1, dans laquelle le pigment à décalage de couleur à base d'aluminium comprend de l'aluminium, du fer et de la silice.

12. Composition d'encre électrophotographique liquide selon la revendication 1, dans laquelle la résine comprend comprend un copolymère d'un monomère alkylène et d'un monomère d'acide (méth)acrylique.

13. Procédé d'impression, comprenant :
l'impression sur un substrat d'une composition d'encre électrostatique liquide, la composition comprenant :
un support liquide ; et
des particules de toner chargeable comprenant une résine et un pigment à décalage de couleur à base d'aluminium.

14. Article imprimé comprenant :
un substrat d'impression, ayant imprimé sur celui-ci une composition d'encre électrostatique comprenant des particules de toner chargeable comprenant une résine et un pigment à décalage de couleur à base d'aluminium.

15. Article imprimé selon la revendication 14, l'article imprimé étant un billet de banque ou une étiquette inviolable.
